# DEMANDE DE BREVET EUROPEEN

(11) **EP 0 522 934 A1**
(43) Date de publication de la demande: **13.01.1993**
(21) Numéro de dépôt: 92401891.4
(22) Date de dépôt: 02.07.1992
(51) Int. Cl.: F16L 41/06, F16L 17/10

(54) **Selle de raccordement à une canalisation et ensemble formé par cette selle et la canalisation**

(30) Priorité: 12.07.1991 FR 9108839
(71) Demandeur: GAZ DE FRANCE (SERVICE NATIONAL), F-75017 Paris (FR)
(72) Inventeur: Pfeiffert, Dominique, F-60440 Nanteuil-Le-Haudouin (FR); Ploujoux, Thierry, F-08000 Prix-les-Mezières (FR); Mourin, Christian, F-95350 Saint Brice Sous Forêt (FR); Bouffard, Laurent, décédé (FR)
(74) Mandataire: Lerner, François

(57) **Abrégé**

Il s'agit d'une selle de raccordement comprenant un corps (5) propre à chevaucher une canalisation (3) ; un embranchement ou piquage transversal (9) avec un passage (13) traversant ledit corps ; et des moyens de liaison pour lier la selle à la canalisation.

Selon l'invention, les moyens de liaison comportent des moyens à ventouse (19, 21, 23) pour appliquer, par la pression de l'air, la selle (1) contre la surface extérieure de la canalisation (3).

Application dans le domaine de la maintenance des canalisations de distribution de gaz.

## Description

L'invention a pour objet une selle de raccordement comprenant un corps propre à chevaucher une canalisation, telle qu'une canalisation de gaz, un embranchement ou piquage transversal avec un passage interne traversant ledit corps, en particulier pour permettre d'intervenir sur la canalisation, et des moyens de liaison pour lier la selle à cette canalisation, ceci d'une façon généralement temporaire.

Outre la selle en tant que telle, l'invention porte également sur l'ensemble constitué par la selle et la canalisation à laquelle cette selle est alors reliée étroitement de façon amovible par lesdits moyens de liaison.

Globalement, l'invention a pour objet d'apporter une solution aux problèmes qui se posent lorsque l'on doit intervenir sur des canalisations véhiculant un fluide (gaz, eau ...), en particulier lorsque ces interventions nécessitent le percement des canalisations.

Les fluides véhiculés étant souvent sous pression, on comprend que pour de telles opérations, des mesures de sécurité doivent être prises.

D'une façon générale et en particulier dans le domaine des interventions sur des canalisations de gaz en charge, les intervenants fixent préalablement au perçage, une selle à embranchement de dérivation (ou piquage).

Jusqu'à présent, on utilise essentiellement deux principes pour maintenir la selle localement autour de la canalisation.

Le premier principe consiste d'abord à souder la selle à la canalisation.

Sur le piquage de cette selle ainsi soudée qui comprend alors une bride, il est ensuite possible de venir fixer une double vanne à passage intégral. Le perçage transversal de la canalisation peut alors être entrepris sans pratiquement de dégagement de gaz vers l'extérieur. Des outils peuvent ensuite être introduits dans la canalisation par l'orifice de perçage. En fin d'intervention, l'obturation de cet l'orifice s'effectue par la pose d'un bouchon obturateur introduit par l'intérieur du piquage. Ce bouchon garantit l'étanchéité ultérieure de la canalisation, sans qu'il ait été besoin d'en réduire ou d'en annuler la charge.

Ce premier principe oblige comme on l'a compris à laisser en place le piquage après intervention.

Un personnel qualifié est également nécessaire, notamment pour souder la selle à la canalisation.

Un second principe actuellement utilisé consiste à fixer la selle et son piquage autour de la canalisation par un système de liaison temporaire du type à chaîne ou à sangle.

Un mécanisme de serrage permet de tendre les sangles ou chaînes afin de plaquer étroitement la selle contre la surface extérieure de la canalisation.

Une fois la selle ainsi placée, les mêmes possibilités d'intervention que celles citées précédemment à titre d'exemple sont envisageables.

La différence essentielle consiste en ce qu'après intervention et bouchage du perçage transversal de la conduite, la selle peut être retirée.

En pratique, ce principe de fixation s'utilise surtout sur les canalisations de très fort diamètre. Il nécessite en pratique d'effectuer des fouilles relativement profondes pour dégager entièrement les abords immédiat de la conduite à l'endroit de l'intervention.

Aucune de ces deux solutions ne permet donc d'obtenir des temps d'interventions brefs, ce qui peut s'avérer essentiel dans certains cas, notamment en cas de fuite du fluide transporté.

Compte tenu des matériels existants et des problèmes pratiques que pose leur utilisation, l'invention vise à proposer une selle de raccordement étanche, pouvant être liée temporairement à la canalisation sans que cela nécessite de dégager entièrement ses abords, la mise en place et le retrait de la selle devant pouvoir s'effectuer rapidement sans requérir un personnel qualifié tel que des soudeurs.

Plus précisément, la selle de raccordement de l'invention se caractérise, pour répondre aux problèmes posés, en ce que ses moyens de liaison à la canalisation comportent des moyens à ventouse permettant d'appliquer de façon sensiblement étanche et par la pression ladite selle contre la surface extérieure de la canalisation qu'elle chevauche alors.

Dans la mesure où les opérations de maintien de la selle autour de la canalisation et de possibles interventions sur cette dernière, à travers le piquage, sont a priori dissociées, une seconde caractéristique de l'invention prévoit que le corps de selle peut se diviser en plusieurs compartiments, lesquels sont encadrés périphériquement par des joints d'étanchéité, un premier de ces compartiments entourant le piquage et un second compartiment comportant une prise de raccordement avec des moyens de mise en dépression du compartiment.

En ce qui concerne les caractéristiques de l'invention relatives à l'ensemble constitué par la selle de raccordement et la canalisation, on se reportera aux termes de la revendication 9 jointe.

On va maintenir décrire plus en détail la présente invention en faisant pour cela référence aux figures annexées données uniquement à titre d'exemples non limitatifs et dans lesquelles :
La figure 1 est une vue schématique en perspective d'un premier mode de réalisation d'une selle de raccordement conforme à l'invention,
la figure 2 est une vue schématique de dessous d'une variante de réalisation de la selle,
la figure 3 est une vue en coupe le long de la ligne III-III de la figure 2,
la figure 4 est, comme la figure 2, une vue schématique de dessous d'un autre mode de réalisation d'une selle de raccordement,
la figure 5 est une vue en coupe selon la ligne V-V de la figure 4,
et la figure 6 est une vue schématique en coupe transversale longitudinale d'une autre variante de réalisation.

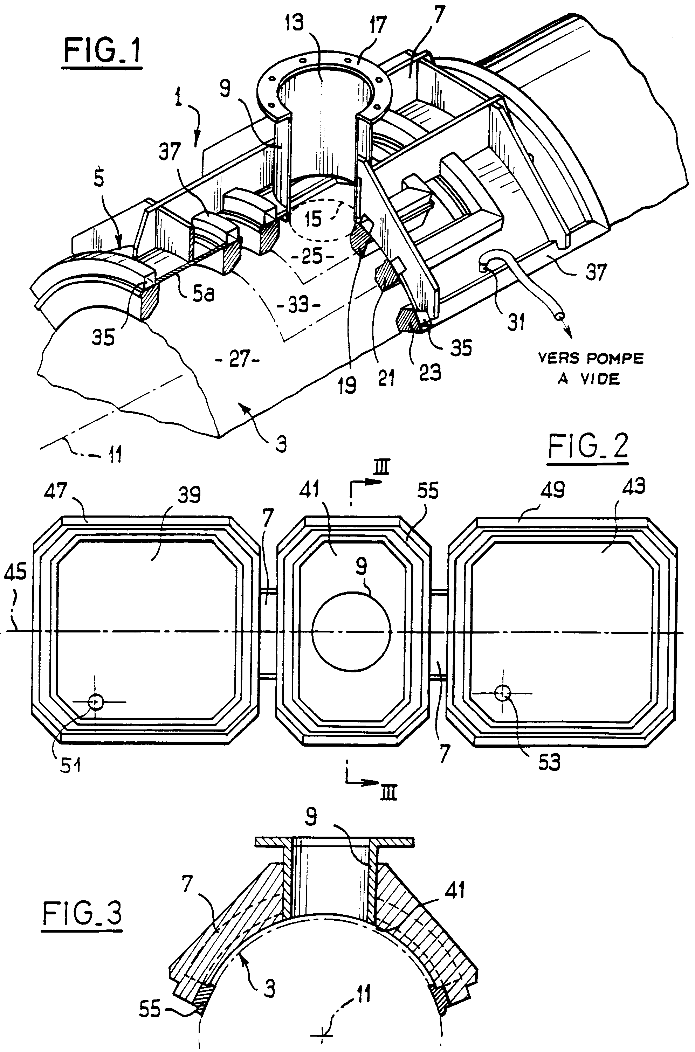

Sur la figure 1 tout d'abord, on voit donc représentée une selle de raccordement 1 destinée à être installée autour d'une canalisation ou conduite 3 dans laquelle peut circuler un fluide sous pression, tel que de l'eau ou du gaz combustible.

La selle 1 comprend un corps de selle métallique 5 renforcée extérieurement par une armature de rigidification 7 raccordée à un fût central 9 s'étendant transversalement à l'axe 11 de la canalisation, vers l'extérieur.

Le fût 9 constitue un piquage ou embranchement permettant, à travers son passage intérieur ouvert 13, d'intervenir sur la canalisation notamment pour y percer un orifice transversal, tel que schématisé par sa trace 15, après que l'on ait raccordé de façon étanche à la colerette supérieure 17 du piquage les outils ou le dispositif d'intervention habituel permettant d'asssurer le perçage transversal de cette canalisation.

Bien entendu, la conformation du fût de piquage 9 est adapté pour recevoir tous les outils actuellement utilisés pour intervenir sur des canalisations de ce type, à savoir par exemple : système de ballonnement simple ou double, hérisson,....

Pour son maintien autour de la canalisation, la selle est, conformément à l'invention, équipée d'un système à ventouse permettant de l'appliquer de façon étanche contre la surface extérieure de la canalisation, par la pression de l'air.

Dans la forme de réalisation illustrée à la figure 1, ce système se présente comme suit :

Du côté intérieur faisant face à la canalisation chevauchée, le corps 5 de selle présente une paroi 5a à surface concave sensiblement cylindrique de diamètre comparable à celui de la canalisation et de section sensiblement en arc de cercle.

Sur cette surface concave, des joints d'étanchéité 19, 21, 23 destinés à venir s'appliquer contre la surface extérieure de la canalisation définissent une série de compartiments étanches sensiblement cylindriques.

Au centre, on trouve un premier compartiment 25 qui entoure le piquage 9 avec lequel il peut éventuellement communiquer. Ce premier compartiment 25 est limité latéralement, sur sa périphérie extérieure, par la première barrière de joints 19 qui l'encadre et l'isole des autres compartiments, et notamment du compartiment extérieur 27 lui-même bordé latéralement, à l'extérieur, par la barrière continue du joint d'étanchéité 23 et, à l'intérieur, par le joint 21.

Dans sa paroi supérieure métallique 5a appartenant au corps 7, le second compartiment 27 comporte une prise de branchement 31 adaptée pour être reliée à des moyens classiques de vide (non représentés) propres à créer une dépression dans le compartiment pour que celui-ci joue le rôle de ventouse, avec écrasement des joints, assurant ainsi l'application étanche de la selle contre la canalisation.

Pour accroître la sécurité, notamment en cas de fuite dans le cadre d'intervention sur des conduites de gaz, les deux compartiments 25 et 27 pourront être séparés par une double barrière de joints 19, 21 délimitant entre eux un compartiment intermédiaire 33 normalement sous pression atmosphérique.

Pour leur maintien, les joints pourront être placés dans des gorges 35 en forme de cadre disposées par exemple concentriquement et ménagées en regard de renforts extérieurs 37 portés par le corps de selle et reliés à l'armature extérieure 7 de ce corps.

Les joints utilisés pourront être par exemple en néoprène à cellule étanche.

Sur la figure 2, la variante de réalisation présentée en vue de dessous permet de constater que dans certains cas, la selle de raccordement de l'invention pourra comporter plusieurs unités de compartimentage telles que 39, 41, 43 alignées suivant une direction générale axiale 45 parallèle à l'axe 11 de la canalisation. Ces unités pourront être séparées d'une unité à la suivante en étant malgré tout toujours liées extérieurement entre elles via les parties d'armature et de renforcement 7 du corps de selle.

En l'espèce, la selle illustrée sur la figure 2 présente intérieurement trois compartiments 39, 41, 43 cylindriques, comme on peut le voir également sur la vue de coupe de la figure 3 (en ce qui concerne le compartiment central 41).

Ces compartiments se divisent en deux unités de côté 39, 43 encadrés latéralement chacune par son joint continu d'étanchéité périphérique 47, 49.

En 51 et 53, on a figuré les emplacements de raccordement des prises permettant à ces deux compartiments 39 et 43 d'être raccordés aux moyens déjà évoqués de mise en dépression, à travers le corps de selle.

Entre ces deux compartiments "de maintien" de la selle se trouve le compartiment "de travail" 41 dans lequel débouche le piquage d'intervention 9, ce compartiment intermédiaire étant bien entendu lui-même encadré sur toute sa périphérie latérale extérieure par un joint continu 55 dont la forme est adaptée pour pouvoir épouser celle de la conduite.

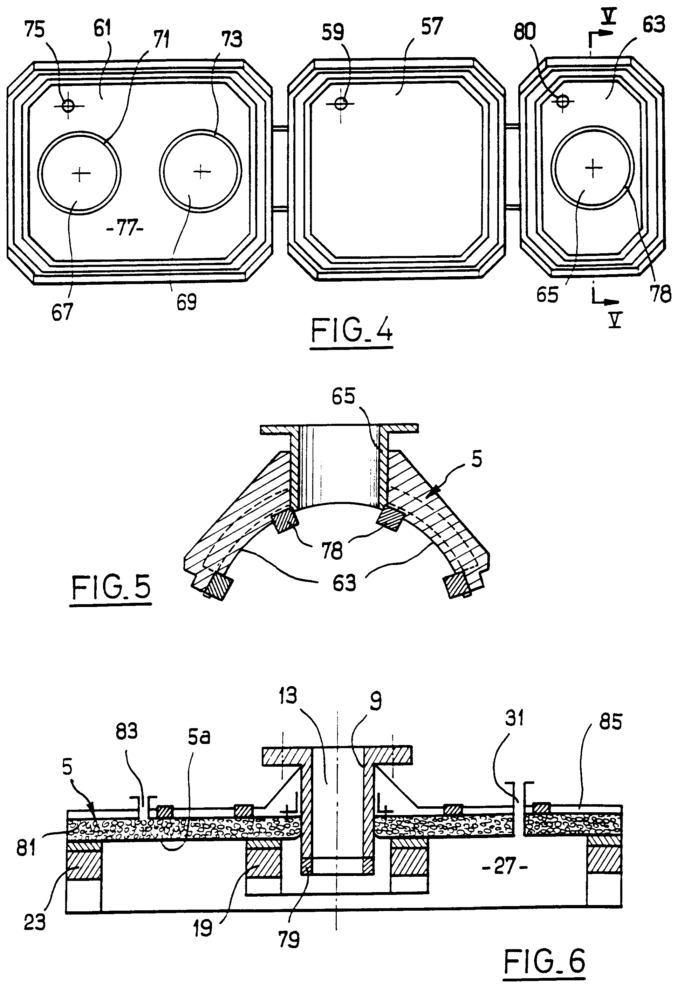

Sur la figure 4, la disposition des unités est en quelque sorte inversée par rapport à celle de la figure 2.

En effet, on constate que sur cette figure l'adhesion par ventouse de la selle de raccordement s'effectue via l'unité de compartimentage intermédiaire 57 dans le "fond" de laquelle on voit la trace de l'embout 59 de branchement auxdits moyens de mise en dépression, ce compartiment intermédiaire 57 étant disposé entre les deux compartiments complémentaires de côté 61, 63. Ces derniers formant en l'espèce à la fois compartiment de travail, dans la mesure où ils sont raccordés, l'un, à un piquage central 65 et l'autre à deux mêmes piquages 67 et 69, et compartiment de maintien en formant extérieurement ventouse. Pour cela, chaque fût des piquages transversaux 67, 69 pourra être lui-même bordé périphériquement, au niveau du compartiment 61, par un joint continu d'étanchéité 71, 73 permettant d'isoler de façon étanche au gaz les piquages de la partie environnante du compartiment, lorsque le vide y sera créé par raccordement avec des moyens de mise en dépression, via le branchement 75 prévu à travers la paroi 77 du corps de selle, à l'écart des piquages. De la même manière un joint 78 pourra séparer le piquage 65 du compartiment extérieur sous vide 63, avec sa prise de vide 80.

Ainsi, pourra t-on créer trois zones adjacentes, mais indépendantes, de maintien de la selle par application du vide.

Sur la figure 6, on retrouve une conformation de selle comparable à celle de la figure 1 avec son piquage central transversal 9 entouré, du côté de la surface concave 5a du corps 5 de selle, par le premier niveau de joints périphériques d'encadrement 19 qui, avec le deuxième niveau extérieur de joints 23, définit la chambre extérieure 27 de maintien sous vide de la selle, via le raccordement de mise en dépression 31.

On remarquera qu'à sa base, le fût 13 du piquage 9 est pourvu d'un joint supplémentaire annulaire d'étanchéité 79 qui, comme tous les autres joints, présente une forme concave adaptée pour pouvoir s'appliquer étroitement, par écrasement sous pression, contre la surface extérieure en regard de la canalisation. Mais la caractéristique essentielle qui distingue la variante de réalisation de cette figure 6, est que le corps 5 de selle est formé à partir d'une poche souple 81 résistant à la pression, de manière à permettre d'adapter la selle à des canalisations de différents diamètres.

Pour figer malgré tout la forme du corps de selle, une fois celui-ci en place sur la canalisation choisie, la (ou les) poche(s) 81 est (sont) reliée(s) via l'embout de raccordement 83 aux moyens précités de dépression, de manière à y créer un vide partiel.

A titre d'exemple, l'enveloppe des poches en question pourra être constituée à base d'élastomère contenant des billes en matériaux plastiques durs, par exemple en polyéthylène haute densité.

Une rigidification complémentaire longitudinale, parallèle à l'axe des canalisations sera avantageusement assurée par des membrures métalliques 85 s'étendant du côté extérieur du corps opposé aux compartiments, ces membrures venant, pour les plus centrales, se raccorder au fût métallique transversal de piquage 9.

## Revendications

**1 -** Selle de raccordement comprenant un corps (5) propre à chevaucher une canalisation (3) ; un embranchement ou piquage transversal (9, 65, 67, 69) avec un passage (13) traversant ledit corps, et des moyens de liaison (27, 39, 43, 57, 61, 63) pour lier la selle à la canalisation, caractérisée en ce que les moyens de liaison comportent des moyens à ventouse (21, 23, 27) pour appliquer, par la pression de l'air, la selle (1) contre la surface extérieure de la canalisation (3).

**2 -** Selle selon la revendication 1 caractérisée en ce que le corps (5) de selle comporte d'un côté une surface concave (5a) présentant plusieurs compartiments (25, 27, 33, 39, 41, 43) encadrés périphériquement par des joints d'étanchéité (19, 21, 23, 47, 49, 55) qui limitent latéralement lesdits compartiments, un premier de ces compartiments (25, 41) entourant ledit embranchement ou piquage transversal (9) et un second compartiment (27, 39, 43) comportant une prise de raccordement (31, 51, 53) avec des moyens de mise en dépression dudit compartiment.

**3 -** Selle selon la revendication 2 caractérisée en ce que le premier compartiment (25) est entouré par le second (27) duquel il est isolé par au moins l'un desdits joints (19, 21).

**4 -** Selle selon la revendication 3 caractérisée en ce que le premier compartiment (25) est séparé du second (27) par deux joints successifs d'encadrement (19, 21) écartés l'un de l'autre pour former un compartiment intermédiaire (33) normalement soumis sensiblement à la pression atmosphérique.

**5 -** Selle selon l'une des revendications 2 ou 3 caractérisée en ce que lesdits compartiments sont répartis en plusieurs unités (57, 61, 63) sensiblement alignées suivant une direction axiale (45) du corps de selle et séparées d'une unité à la suivante, ces unités comprenant :
- deux unités de côté (61, 63) comprenant au moins un dit premier compartiment (65, 67, 69) entourant ou communiquant avec ledit embranchement ou piquage transversal, ce(s) premier(s) compartiment(s) étant entouré(s) par un dit second compartiment,
- et au moins une unité intermédiaire (57) comprenant un dit premier compartiment équipé d'une prise (59) pour le raccordement de ce compartiment avec lesdits moyens de mise en dépression.

**6 -** Selle selon l'une des revendications 2 ou 3 caractérisée en ce que lesdits compartiments sont répartis en plusieurs unités (39, 41, 43) sensiblement alignées suivant une direction axiale (45) du corps de selle et séparées d'une unité à la suivante, ces unités comprenant :
- deux unités de côté (39, 43) comprenant un dit second compartiment équipé chacun d'une prise (51, 53) de branchement du compartiment avec lesdits moyens de mise en dépression,
- et au moins une unité intermédiaire (41) comprenant un dit premier compartiment communiquant avec ou entourant ledit embranchement ou piquage transversal (9).

**7 -** Selle selon l'une quelconque des revendications 2 à 6 caractérisée en ce que la partie du corps (3) de selle où est situé ledit second compartiment (27) forme une poche souple (81) résistante qui est équipée d'une prise de branchement (83) pour la mise en dépression de la poche.

**8 -** Selle selon la revendication 7 caractérisée en ce que ladite poche comporte une enveloppe souple en élastomère et contient des billes en matériau dur, tel qu'une matière plastique.

**9 -** Ensemble comprenant une selle (1) de raccordement avec un corps de selle (5) à surface intérieure concave (5a) sensiblement cylindrique chevauchant une surface extérieure d'une canalisation (3), ledit corps portant un embranchement ou piquage transversal (9) pourvu intérieurement d'un passage (13) traversant le corps pour communiquer avec l'intérieur de la canalisation par un orifice (15) ménagé à travers la paroi de cette dernière, ladite selle étant liée étroitement de façon amovible à la canalisation (3) par des moyens de liaison (27, 39, 43, 57, 61, 63), caractérisé en ce que lesdits moyens de liaison disposés entre ladite surface intérieure (5a) du corps de selle et la surface extérieure du regard de la canalisation (3) sont du type à ventouse assurant un maintien sensiblement étanche au gaz de la selle autour de la canalisation.

**10 -** Ensemble selon la revendication 9 caractérisé en ce que du côté de sa surface intérieure (5a), le corps (5) de selle est compartimenté, un premier de ces compartiments (25) entourant une partie de l'embranchement ou piquage transversal qui communique avec ledit orifice transversal (15) de la canalisation, ce premier compartiment étant lui-même entouré d'un second compartiment (27) duquel il est isolé par au moins un joint périphérique d'étanchéité (19, 21), ce second compartiment qui est encadré latéralement par un autre joint d'étanchéité (23) étant raccordé à des moyens de mise en dépression, pour former ventouse et constituer ainsi lesdits moyens de liaison de la selle à la canalisation.

**11 -** Ensemble selon la revendication 10 caractérisé en ce que lesdits joints d'étanchéité (21, 23, 43,...) desdits moyens de liaison du type à ventouse sont fixés à ladite surface intérieure concave (5a) du corps (5) de selle et sont conformés pour épouser la forme de la surface extérieure de la canalisation (3) chevauchée.
